# EUROPÄISCHE PATENTSCHRIFT

(11) **EP 3 033 811 B1**
(45) Veröffentlichungstag und Bekanntmachung des Hinweises auf die Patenterteilung: **03.07.2019**
(21) Anmeldenummer: 14758275.3
(22) Anmeldetag: 22.07.2014
(51) Int. Cl.: H01S 3/08, H01S 3/081, H01S 3/0941, H01S 3/115, H01S 3/02, H01S 3/06

(54) **GÜTEGESCHALTETER FESTKÖRPERLASER**
Q-SWITCHED SOLID-STATE LASER
LASER À SOLIDE À MODULATION DE QUALITÉ

(30) Priorität: 12.08.2013 AT 6382013
(43) Veröffentlichungstag der Anmeldung: 22.06.2016
(73) Patentinhaber: Kopf, Daniel, Dr., 6832 Röthis (AT); Montfort Laser GmbH, 6840 Götzis (AT)
(72) Erfinder: AGAZZI, Laura, 6840 Götzis (AT); Kopf, Daniel, 6832 Röthis (AT)
(74) Vertreter: Hofmann, Ralf U.
(86) Internationale Anmeldenummer: PCT/AT2014/000146
(87) Internationale Veröffentlichungsnummer: WO 2015/021488

(56) Entgegenhaltungen:
- US-A- 4 099 141
- US-A- 4 504 956
- US-B1- 7 548 575
- ARMANDILLO E ET AL: "DIODE-PUMPED HIGH-EFFICIENCY HIGH-BRIGHTNESS Q-SWITCHED ND:YAT SLABLASER", OPTICS LETTERS, OPTICAL SOCIETY OF AMERICA, US, Bd. 22, Nr. 15, 1. August 1997 (1997-08-01), Seiten 1168-1170, XP000699115, ISSN: 0146-9592 in der Anmeldung erwähnt

## Beschreibung

Die Erfindung bezieht sich auf einen gütegeschalteten Festkörperlaser mit einer Spitzenleistung von mehr als 1 MW, umfassend einen Resonator, welcher einen eine Strahlachse aufweisenden Laserstrahl führt und welcher einen ersten und einen zweiten Endspiegel und mit dem Laserstrahl zwischen dem ersten und dem zweiten Endspiegel zusammenwirkende optische Elemente aufweist, die ein gepumptes Lasermedium umfassen, wobei der Laserstrahl vom ersten Endspiegel in eine Richtung reflektiert wird, die zumindest im Wesentlichen parallel sowie gleichgerichtet mit der Richtung ist, in welche der Laserstrahl vom zweiten Endspiegel reflektiert wird.

Gütegeschaltete Festkörperlaser, auch als Q-Switched Festkörperlaser bezeichnet, werden eingesetzt, um Laserpulse mit hohen Pulsenergien bereitzustellen. Die Pulsdauer liegt üblicherweise im Nanosekundenbereich. Für das optische Pumpen des Lasermediums werden häufig Laserdioden eingesetzt. Stattdessen können hierfür beispielsweise auch Gasentladungslampen verwendet werden. Mit Laserdioden gepumpte gütegeschaltete Festkörperlaser gehen beispielsweise aus Errico Armandillo and Callum Norrie: "Diode-pumped high-efficiency highbrightness Q-switched ND:YAG slab laser", OPTICS LETTERS, Vol. 22, No. 15, 1. August 1997, Seiten 1168 bis 1170, Eric C. Honea et al.: "Analysis of an intracavitydoubled diode-pumped Q-switched Nd:YAG laser producing more than 100 W of power at 0.532 µm", OPTICS LETTERS, Vol. 23, No. 15, 1. August 1998, Seiten 1203 bis 1205 und WO 2010/052308 A1 hervor. Aus der erstgenannten Schrift geht insbesondere ein Zick-Zack-Plattenlaser (=Laser mit "zig-zag slab gain medium") hervor. Die Ein- und Austrittsflächen des Lasermediums für die vom verstärkenden Lasermedium emittierte Laserstrahlung, die im Resonator geführt ist, sind gegensinnig im Brewster-Winkel angeordnet. Der Resonator ist mittels eines einfachen Porro-Prismas gefaltet.

Die Resonatoren von solchen gütegeschalteten Festkörperlasern mit hohen Spitzenleistungen von mehr als 1 MW werden üblicherweise derart ausgebildet, dass der erste und der zweite Endspiegel und die dazwischen liegenden optischen Elemente keinen im Resonator liegenden Brennpunkt ausbilden. Andernfalls würden lokal sehr hohe Energiedichten erzeugt, die zur Ionisierung der Luft (Durchschlag) und/oder zu zerstörenden Wirkungen an optischen Elementen und/oder zu unerwünschten nicht linearen optischen Effekten führen können.

Bei nicht gattungsgemäßen modengekoppelten Ultrakurzpulslasern mit Pulslängen im Pikosekundenbereich oder Femtosekundenbereich kommen dagegen vergleichsweise lange Resonatoren (bezogen auf die entfaltete Länge) zum Einsatz, wobei hier stärker fokussierende optische Elemente eingesetzt werden, durch welche Brennpunkte im Resonator ausgebildet werden. Derart modengekoppelte Festkörperlaser sind u.a. in der WO 2011/160143 A2 und EP 2 284 965 A1 beschrieben. Zur Verringerung der Empfindlichkeit gegenüber Verkippungen geht aus diesen Schriften hervor, zwei Spiegel des Resonators starr miteinander zu verbinden, deren gleichsinnige Verkippungen entgegengesetzte Auswirkungen auf die Lage des Laserstrahls an einem verschiebungssensitiven Referenzpunkt haben. In der letztgenannten Schrift kann es sich hierbei um die beiden Endspiegel handeln.

Aufgabe der Erfindung ist es einen vorteilhaften gütegeschalteten Festkörperlaser der eingangs genannten Art bereitzustellen, der sich durch einen unempfindlichen Aufbau auszeichnet, insbesondere gegenüber Verkippungen der Endspiegel. Erfindungsgemäß gelingt dies durch einen Laser mit den Merkmalen des Anspruchs 1.

Bei einem gütegeschalteten Festkörperlaser gemäß der Erfindung sind die mit dem Laserstrahl zwischen dem ersten und zweiten Endspiegel zusammenwirkenden optischen Elemente derart ausgebildet, dass sie bei einer Propagation eines Bildes ausgehend vom ersten Endspiegel bewirken, dass das Bild nach der Propagation über die zwischen dem ersten und dem zweiten Endspiegel liegenden optischen Elemente und der Reflektion am zweiten Endspiegel in Propagationsrichtung gesehen zumindest im Wesentlichen um 180° gegenüber seiner ursprünglichen in Propagationsrichtung gesehenen Ausrichtung relativ zur Strahlachse um die Strahlachse gedreht und seitenrichtig ist. Diese gedrehte und seitenrichtige Übertragung des Bildes erfolgt hierbei nur aufgrund von Reflektionen des Laserstrahls an den zwischen dem ersten und dem zweiten Endspiegel liegenden optischen Elementen und am zweiten Endspiegel. Im Weiteren sind der erste und der zweite Endspiegel starr miteinander verbunden. Bei den beiden Endspiegeln kann es sich hierbei um separate Bauteile handeln, die, beispielsweise über ein weiteres Bauteil in starrer Verbindung stehen. Es könnte auch ein materialeinstückiges Bauteil vorgesehen sein, von dem ein Abschnitt den ersten und ein weiterer Abschnitt den zweiten Endspiegel bildet.

Die Erfindung beruht auf der Erkenntnis, dass durch die genannte Ausbildung der zwischen dem ersten und dem zweiten Endspiegel mit dem Laserstrahl zusammenwirkenden optischen Elemente und die starre Verbindung der Endspiegel eine gegenüber herkömmlichen gütegeschalteten Festkörperlasern der eingangs genannten Art wesentlich ausgeprägtere Unempfindlichkeit gegenüber Verkippungen der Endspiegel um beliebige Achsen erreicht wird.

Zusätzlich zur Drehung des Bildes zumindest im Wesentlichen um 180° um die Strahlachse kann auch eine Größenänderung des Bildes erfolgen und zwar aufgrund einer fokussierenden Ausbildung zumindest eines der Endspiegel und/oder zumindest eines der zwischen den Endspiegeln liegenden optischen Elemente, beispielsweise des gepumpten Lasermediums aufgrund der Ausbildung einer thermischen Linse. Die Größenänderung des Bildes kann hierbei in zumindest zwei rechtwinkelig zur Propagationsrichtung stehenden Achsen unterschiedlich sein oder es kann nur bezogen auf eine rechtwinkelig zur Propagationsrichtung stehende Achse eine solche Größenänderung vorhanden sein.

Unter "Propagation über ein optisches Element" wird ein den Durchlauf durch ein optisches Element, gegebenenfalls mit mindestens einer inneren Reflektion, oder auch Reflektion an einer äußeren Oberfläche eines optischen Elements verstanden.

Weitere Vorteile und Einzelheiten der Erfindung werden im Folgenden anhand der beiliegenden Zeichnung erläutert. In dieser zeigen:
Fig. 1 und 2 eine vereinfachte Darstellung eines ersten Ausführungsbeispiels der Erfindung in Draufsicht und Seitenansicht;
Fig. 3 eine Schrägsicht von Komponenten des ersten Ausführungsbeispiels (ohne die Pumpeinrichtung, den Polarisator, die Pockels-Zelle und das Lambda-Viertel-Plättchen);
Fig. 4 und 5 eine Draufsicht und Seitenansicht analog Fig. 1 und 2 für ein zweites Ausführungsbeispiel der Erfindung;
Fig. 6 eine Schrägsicht von Komponenten eines Lasers gemäß einer dritten Ausführungsform der Erfindung, die Pumpeinrichtung, der Polarisator, die Pockels-Zelle und das Lambda-Viertel-Plättchen der Einfachheit halber weggelassen.

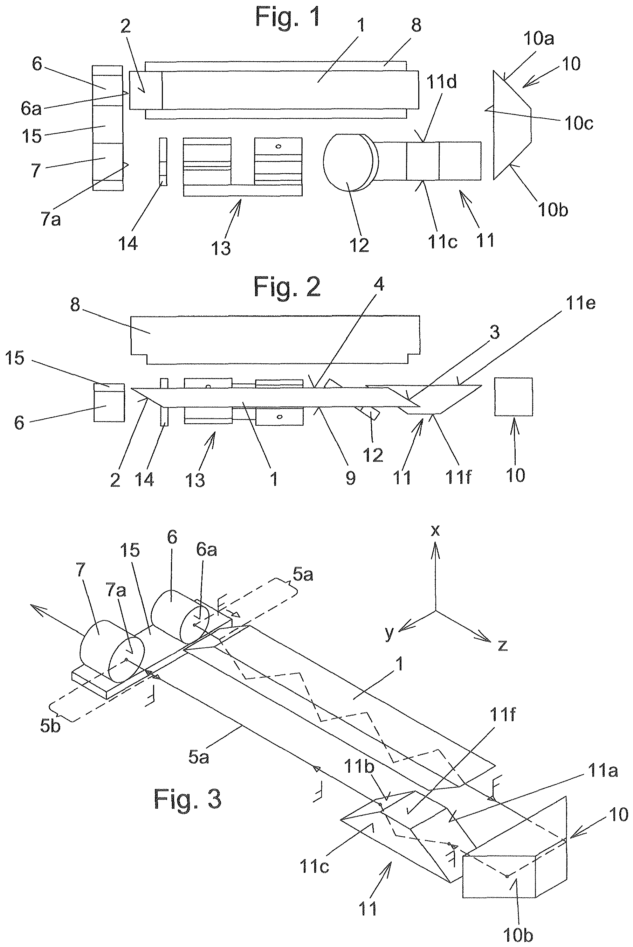

Ein erstes Ausführungsbeispiel der Erfindung wird im Folgenden anhand der Fig. 1 bis 3 erläutert. Die vereinfachten Figuren zeigen einen Festkörperlaser, dessen Resonator eine Güteschaltung (=einen Q-Switch) aufweist. Bei Festkörperlasern besteht das verstärkende (=aktive) Lasermedium, in welchem durch optisches Pumpen eine Besetzungsinversion erzeugt wird, aus einem kristallinen oder glasartigen (amorphen) Festkörper. Beispielsweise kann das verstärkende Lasermedium 1 Nd:YAG, Nd:Glas, Nd:Vanadat, Yb:YAG, Ho:YAG, Tm: YAG, Er:YAG oder eine ko-dotierte Variante hiervon (z.B. Tm:Ho:YAG) sein.

Das verstärkende Lasermedium 1 ist Teil des Resonators des Lasers, dessen Komponenten weiter unten genauer erläutert werden.

In den Figuren sind insbesondere eine Grundplatte und Befestigungselemente zur Befestigung der verschiedenen Komponenten des Lasers an der Grundplatte nicht dargestellt.

Das Lasermedium 1 ist beispielsweise plattenförmig ausgebildet, es handelt sich also um einen Plattenlaser (="slab laser"). Der Strahl der vom verstärkenden Lasermedium 1 emittierten Laserstrahlung verläuft zick-zack-förmig durch das Lasermedium 1. Die Ein- und Austrittsflächen 2, 3 für die vom Lasermedium 1 emittierte, den Resonator durchlaufende Laserstrahlung sind vorteilhafterweise im Brewster-Winkel angeordnet. Denkbar wäre es beispielsweise auch, dass die Laserstrahlung das verstärkende Lasermedium 1 geradlinig durchläuft.

Im gezeigten Ausführungsbeispiel ist das Lasermedium 1 seitengepumpt, wie dies bevorzugt ist. Die das verstärkende Lasermedium 1 pumpende Strahlung, insbesondere Laserstrahlung, fällt also nicht durch die Ein- oder Austrittsfläche 2, 3 in das Lasermedium 1 ein, sondern durch eine Seitenfläche 4. Diese steht winkelig zur Eintrittsfläche 2 und zur Austrittsfläche 3.

Die Pumpeinrichtung 8 ist nur in Fig. 1 und 2 schematisch dargestellt. Diese umfasst eine Strahlungsquelle, welche vorzugsweise von einer Mehrzahl von Laserdioden gebildet wird. Bekannt sind Pumpeinrichtungen mit Laserdioden-Stacks. Insbesondere umfasst ein solcher Laserdioden-Stack mehrere Barren, welche jeweils mehrere Laserdioden aufweisen, die in eine Längsrichtung voneinander beabstandet sind. Die von den Laserdioden abgegebene Laserstrahlung wird durch eine Optik dem Lasermedium 1 zugeführt.

Das Lasermedium 1 könnte statt plattenförmig beispielsweise auch stabförmig ausgebildet sein.

Der vom Resonator geführte Laserstrahl, dessen Strahlachse 5 in Fig. 3 eingezeichnet ist, läuft zwischen dem ersten und dem zweiten Endspiegel 6, 7 des Resonators hin und her. Es handelt sich also um einen linearen Resonator, auch als Stehende-Wellen-Resonator bezeichnet, im Unterschied zu einem Ringresonator, in welchem das Laserlicht umlaufend geführt ist, sodass im Gegensatz zum linearen Resonator grundsätzlich zwei verschiedene Umlaufrichtungen möglich sind.

Als Radius des Laserstrahls bzw. Lasermodes wird der Abstand von der Strahlachse (=Mittelachse) herangezogen, bei dem die Intensität des Laserstrahls auf einen Wert von 1/e2 (ca. 13,5%) sinkt. Der Durchmesser des Laserstrahls ist der doppelte Wert des Radius des Laserstrahls.

Der erste und der zweite Endspiegel 6, 7 sind über ein starres Verbindungsteil 15, mit dem der erste und der zweite Endspiegel 6, 7 starr verbunden ist, starr miteinander verbunden. Auch eine unmittelbare starre Verbindung des ersten und zweiten Endspiegels 6, 7 ist denkbar und möglich. Weiters könnte beispielsweise auch ein gemeinsames, materialeinstückig ausgebildetes Bauteil vorhanden sein, von welchem ein Abschnitt den ersten Endspiegel 6 und ein weiterer Abschnitt den zweiten Endspiegel 7 bildet.

Der zweite Endspiegel 7 ist als Auskoppelspiegel ausgebildet, um den vom Laser abgegebenen Laserstrahl auszukoppeln.

Ein an den ersten Endspiegel 6 anschließender Abschnitt 5a der Strahlachse des Laserstrahls ist parallel zu einem an den zweiten Endspiegel 7 anschließenden Abschnitt 5b der Strahlachse 5 des Laserstrahls. Die Endspiegel 6, 7 reflektieren hierbei den Laserstrahl an zur gleichen Seite hin gerichteten reflektierenden Flächen 6a, 7a. Der Laserstrahl verlässt den ersten Endspiegel 6 nach der Reflektion an diesem somit in die gleiche Richtung, in welche der Laserstrahl den zweiten Endspiegel 7 nach der Reflektion an diesem verlässt und diese Richtung ist in Fig. 3 als z-Achse eines kartesischen Koordinatensystems dargestellt.

Die an die ersten und zweiten Endspiegel 6, 7 anschließenden Abschnitte 5a, 5b der Strahlachse 5 des Laserstrahls stehen rechtwinkelig zur reflektierenden Fläche 6a, 7a des jeweiligen Endspiegels 6, 7 an der Stelle ihres Schnittpunkts mit der jeweiligen reflektierenden Fläche 6a, 7a. Dies kann auch als "Laserbedingung" bezeichnet werden.

Zwischen dem ersten und zweiten Endspiegel 6, 7 wirken mit dem Laserstrahl mehrere optische Elemente zusammen. Das Lasermedium 1 bildet selbst eine dieser optischen Elemente. Im gezeigten Ausführungsbeispiel wird der Laserstrahl an Seitenflächen 4, 9 intern durch Totalreflektion reflektiert, sodass der Laserstrahl das Lasermedium 1 zick-zack-förmig durchläuft. Der Laserstrahl erfährt hierbei eine gerade Anzahl von Reflektionen. Auch ein geradliniger Durchlauf des Laserstrahls durch das Lasermedium 1 ohne Reflektion des Laserstrahls ist denkbar und möglich.

Im Ausführungsbeispiel ist der Resonator durch ein einfaches Porro-Prisma (="single-Porro-prism") 10 gefaltet. Es handelt sich um ein Prisma nach Art eines gleichschenkeligen, rechtwinkeligen Reflektionsprismas, wobei beim gezeigten Prisma der optisch nicht wirksame Bereich ("die Spitze") entfernt oder weggelassen ist. Dieser könnte aber auch vorhanden sein. An den beiden im Winkel von 90° zueinander stehenden Mantelflächen 10a, 10b dieses einfachen Porro-Prismas 10 erfolgt jeweils eine interne Reflektion des Laserstrahls durch Totalreflektion, sodass die Strahlachse 5 in einer Ebene insgesamt um 180° umgelenkt wird. Der Ein- und Austritt erfolgt durch die die beiden Mantelflächen 10a, 10b verbindende Bodenfläche 10c (die der weggelassenen oder gegebenenfalls vorhandenen Spitze gegenüberliegt und eine weitere Mantelfläche des Prismas darstellt).

Der an den ersten Endspiegel 6 anschließende Abschnitt 5a der Strahlachse 5 liegt in der gleichen Ebene wie der an den zweiten Endspiegel 7 anschließende Abschnitt 5b der Strahlachse 5. Diese gemeinsame Ebene wird als y-z-Ebene des kartesischen Koordinatensystems genommen, vgl. Fig. 3.

Im Ausführungsbeispiel erfolgt die Umlenkung des Laserstrahls durch das einfache Porro-Prisma 10 in der Ebene, in der die an den ersten Endspiegel 6 und an den zweiten Endspiegel 7 anschließenden Abschnitte 5a, 5b der Strahlachse 5 liegen.

Als weiteres optisches Element enthält der Resonator ein Dove-Prisma 11. Dieses ist ein gleichschenkeliges Prisma, von welchem der optisch nicht wirksame Bereich ("die Spitze") entfernt oder weggelassen ist. Der Ein- und Austritt der Laserstrahlung erfolgt durch gegeneinander geneigte Mantelflächen 11a, 11b. Diese sind durch die Grundfläche 11c und Deckfläche 11d des Prismas miteinander verbunden. Weiters sind die Mantelflächen 11a, 11b durch die Bodenfläche 11e und Dachfläche 11f, welche weitere Mantelflächen des Prismas bilden, miteinander verbunden. Wenn der optisch nicht wirksame Bereich des gleichschenkeligen Prismas (="die Spitze") beibehalten würde, so würde die Dachfläche 11f entfallen.

Der Eintritt der Laserstrahlung an den Mantelflächen 11a, 11b erfolgt vorzugsweise im Brewster-Winkel, sodass eine Entspiegelung der Mantelflächen 11a, 11b entfallen kann. Damit liegt der Winkel zwischen den Mantelflächen 11a, 11b im Ausführungsbeispiel bei 111,2°.

Zwischen dem Eintritt und dem Austritt durch die Mantelflächen 11a, 11b erfolgt eine einfache Reflektion an der Bodenfläche 11e durch Totalreflektion. Die an das Dove-Prisma 11 anschließenden Abschnitte der Strahlachse 5, vor dem Eintritt und nach dem Austritt fluchten miteinander. Die Ablenkung der Strahlachse im Dove-Prisma erfolgt in einer Ebene, die rechtwinkelig zur Ebene der Umlenkung im einfachen Porro-Prisma 10 steht, im Ausführungsbeispiel in der x-z-Ebene.

Um einen Güteschalter auszubilden, sind im Strahlengang des Resonators im dargestellten Ausführungsbeispiel in bekannter Weise ein Polarisator 12, eine Pockels-Zelle 13 und ein Lambda-Viertel-Plättchen 14 angeordnet. Die vom Laser abgegebene Laserstrahlung ist somit gepulst.

Es könnten auch andere Güteschalter zur Ausbildung einer gepulsten Laserstrahlung eingesetzt werden. Neben elektrooptischen Güteschaltern sind beispielsweise akustooptische Güteschalter denkbar und möglich.

Der Polarisator 12, die Pockels-Zelle 13 und das Lambda-Viertel-Plättchen 14 sind entsprechend Fig. 1 und 2 zwischen dem Dove-Prisma 11 und dem zweiten Endspiegel 7 angeordnet. Auch könnte die Anordnung an einer anderen Stelle im Strahlengang im Resonator erfolgen, z.B. zwischen dem ersten Endspiegel 6 und dem Lasermedium 1.

Wenn man die optischen Eigenschaften des Resonators anhand der Propagation eines gedachten Bildes ausgehend vom ersten Endspiegel 6 betrachtet, vgl. Fig. 3, so ergibt sich Folgendes:
In Fig. 3 ist das Bild durch den Buchstaben F symbolisiert, wie üblich bei der Darstellung von optischen Eigenschaften beispielsweise von Prismen.

Die Ausrichtung relativ zur Strahlachse 5 des Bildes hat sich nach dem Durchlaufen des Lasermediums 1 nicht geändert, ebenso wenig dessen Händigkeit (auch als Seitenrichtigkeit bezeichnet), da im Lasermedium 1 eine ganzzahlige Anzahl von Reflektionen stattfindet. Das Bild ist also nach dem Durchlaufen des Lasermediums 1 aufrecht und seitenrichtig (also nicht spiegelverkehrt).

Nach dem Durchlaufen des einfachen Porro-Prismas 10 ist die in Propagationsrichtung gesehene Orientierung relativ zur Strahlachse 5 und Händigkeit des Bildes nach wie vor unverändert, das Bild ist also weiterhin aufrecht und seitenrichtig. Die Propagationsrichtung ist durch das einfache Porro-Prisma 10 aber um 180° umgelenkt worden.

Nach dem Durchlaufen des Dove-Prismas 11 steht das Bild auf dem Kopf und ist seitenverkehrt. Das Dove-Prisma 11 erzeugt also ein an der y-z-Ebene gespiegeltes Bild.

Beim Durchlaufen des Polarisators 12, der Pockels-Zelle 13 und des Lambda-Viertel-Plättchens 14 ändert sich die Orientierung des Bildes gegenüber der Strahlachse 5 und die Händigkeit des Bildes nicht. Diese optischen Elemente sind somit in Fig. 3 der Einfachheit halber weggelassen.

Die Propagationsrichtungen sind in Fig. 3 durch Pfeile angedeutet.

Bei der Reflektion am zweiten Endspiegel 7 ändert sich wiederum die Händigkeit des Bildes. Nach der Reflektion am zweiten Endspiegel 7 besitzt das Bild wiederum die ursprüngliche Händigkeit, ist also seitenrichtig, d.h. nicht spiegelverkehrt, steht aber nach wie vor auf dem Kopf.

Insgesamt ist das Bild nach der Reflektion am zweiten Endspiegel 7, bevor es wieder mit einem der zwischen dem ersten und zweiten Endspiegel 6, 7 liegenden optischen Elemente zusammenwirkt, in Propagationsrichtung gesehen seitenrichtig und gegenüber dem vom ersten Endspiegel 6 ausgehenden, in Propagationsrichtung gesehenen Bild um 180° um die Strahlachse 5 (=um die Propagationsrichtung) gedreht.

Es wird also die Ausrichtung des Bildes relativ zum an den ersten Endspiegel 6 anschließenden Abschnitt 5a der Strahlachse 5 mit der Ausrichtung des Bildes relativ zum an den zweiten Endspiegel 7 anschließenden Abschnitt 5b der Strahlachse 5 verglichen, und zwar jeweils in Propagationsrichtung. Hierbei sind die Abschnitte 5a, 5b der Strahlachse 5 parallel und die Propagationsrichtungen ausgehend vom ersten Endspiegel 6 und ausgehenden vom zweiten Endspiegel 7 gleichgerichtet.

Der erfindungsgemäße Effekt wird immer noch zumindest großteils erzielt, wenn die Abschnitte 5a, 5b der Strahlachse 5 nicht ganz parallel liegen, d.h. einen Winkel miteinander einschließen. Entsprechend schließt dann die Richtung, in welche der Laserstrahl ausgehend vom zweiten Endspiegel 7 reflektiert wird (=Propagationsrichtung des Bildes ausgehend vom zweiten Endspiegel 7) einen Winkel mit der Richtung ein, in welche der Laserstrahl ausgehend vom ersten Endspiegel 6 reflektiert wird (=Propagationsrichtung des Bildes ausgehend vom ersten Endspiegel 6). Wenn im Rahmen dieser Schrift davon die Rede ist, dass diese beiden Richtungen im Wesentlichen parallel sind, so sollen hierbei Winkel zwischen diesen beiden Richtungen umfasst sein, die kleiner als 30° sind.

Ebenso wird der erfindungsgemäße Effekt immer noch zumindest großteils erzielt, wenn die beschriebene Drehung des Bildes um die Strahlachse 5 bzw. Propagationsrichtung nicht genau 180° beträgt. Wenn im Rahmen dieser Schrift davon die Rede ist, dass diese Drehung im Wesentlichen 180° beträgt, so sollen dadurch Drehwinkel umfasst sein, die hiervon um weniger als 30° abweichen.

Die Ausrichtung des durch den Buchstaben F symbolisierten Bildes nach der Propagation über die zwischen dem ersten Endspiegel 6 und dem zweiten Endspiegel 7 liegenden optischen Elemente könnte auch so beschrieben werden, dass das Bild an zwei Ebenen gespiegelt worden ist, und an der Ebene, in welcher die Abschnitt 5a, 5b der Strahlachse 5 liegen, sowie an einer Ebene, die rechtwinkelig hierzu steht und parallel zu den Abschnitten 5a, 5b der Strahlachse 5 liegt.

Das durch den Buchstaben F symbolisierte Bild wurde als "gedachtes Bild" beschrieben. Natürlich kann man stattdessen ein reales Bild durch den Resonator wie beschrieben propagieren lassen, um die optischen Eigenschaften des Resonators zu untersuchen.

Real kann das durch den Buchstaben F symbolisierte Bild auch als Strahlprofil eines konkreten Laserstrahls (also als dessen Intensitätsverteilung um die Strahlachse 5 bezogen auf alle Richtungen rechtwinkelig zur Strahlachse 5) angesehen werden. In der Realität besitzt ein solches Strahlprofil gegenüber der idealen (z.B. Gauss'schen) Verteilung, die beispielsweise in alle Richtungen rechtwinkelig zur Strahlachse 5 gleichmäßig ist, Abweichungen. Diese werden entsprechend der Abbildung des durch den Buchstaben F symbolisierten Bildes abgebildet. Unregelmäßigkeiten im Strahlprofil des Laserstrahls könnten auch dem Laserstrahl bewusst aufmoduliert werden, um die Abbildungseigenschaften des Resonators zu untersuchen.

Die beschriebene gedrehte und seitenrichtige Übertragung des Bildes erfolgt nur aufgrund von Reflektionen des Laserstrahls an den zwischen dem ersten und zweiten Endspiegel 6, 7 angeordneten optischen Elementen sowie am zweiten Endspiegel 7. Es erfolgt somit keine Bildumkehr durch fokussierende Linsen und/oder Hohlspiegel. Mit anderen Worten bilden der erste und der zweite Endspiegel 6, 7 in Verbindung mit den zwischen den Endspiegeln 6, 7 liegenden optischen Elementen keinen im Resonator liegenden Brennpunkt aus.

Eine Fokussierung des Laserstrahls im Resonator an mindestens einem Brennpunkt ist bei einem gütegeschalteten Festkörperlaser mit einer relativ hohen Spitzenleistung unerwünscht, dies insbesondere in Hinblick auf eine mögliche Ionisation der Luft und/oder zerstörende Wirkung auf optische Bauelemente und/oder ein Hervorrufen von nichtlinearen optischen Effekten.

Die Brennweiten von allen vorhandenen fokussierenden Bauelementen (inklusive der ersten und der zweite Endspiegel 6, 7 und der zwischen diesen angeordneten optischen Elementen), welche eine fokussierende Wirkung aufweisen, also eine Sammellinse oder einen Hohlspiegel darstellen, sind also relativ groß und/oder werden zumindest teilweise von Elementen kompensiert, welche eine zerstreuende Wirkung aufweisen, also eine Zerstreuungslinse oder einen Konvexspiegel darstellen.

Vorzugsweise sind die Brennweiten von allen vorhandenen fokussierenden Bauelementen größer als die Abmessungen des Resonators in jede Richtung (bezogen auf die gefaltete Anordnung).

Die Propagation des durch den Buchstaben F symbolisierten Bildes wurde zuvor ohne die Wirkung von fokussierenden oder zerstreuenden Elementen beschrieben. In der Praxis erfolgt auch eine Größenänderung des Bildes, allein schon aufgrund der vom Lasermedium 1 gebildeten thermischen Linse. Auch ist es günstig, zumindest einen der Endspiegel 6, 7 als Hohlspiegel auszubilden.

Eine Größenänderung des Bildes kann auch in Bezug auf unterschiedliche, rechtwinkelig zur Strahlachse 5 stehende Richtungen unterschiedlich sein. So kann beispielsweise der auf den zweiten Endspiegel 7 auftreffende Laserstrahl oval sein.

Wenn die Situation betrachtet wird, dass die Endspiegel 6, 7 und die dazwischen liegenden optischen Elemente alle optimal justiert sind und ausgehend hiervon der erste Endspiegel 6 aus seiner symmetrischen Mittellage um eine parallel zur x-Achse liegende Achse verschwenkt wird, und zunächst angenommen wird, dass beide Endspiegel 6, 7 nicht starr miteinander verbunden sind und der zweite Endspiegel 7 damit nicht verschwenkt wird, so hat dies, zumindest ab einem bestimmten Winkel der Verschwenkung negative Auswirkungen auf die Intensität des am zweiten Endspiegel 7 ausgekoppelten Laserstrahls. Bei der zuvor beschriebenen optischen Ausbildung eines erfindungsgemäßen Lasers werden diese negativen Auswirkungen zumindest teilweise kompensiert, wenn der zweite Endspiegel 7 ebenfalls um eine parallel zur x-Achse liegende Achse gleichsinnig verschwenkt wird. Da der erste Endspiegel 6 und der zweite Endspiegel 7 aber starr miteinander verbunden sind, ergibt sich eine solche gleichsinnige Verschwenkung automatisch.

Das Gleiche gilt für eine Verschwenkung des ersten Endspiegels 6 und damit auch eine gleichsinnige Verschwenkung des zweiten Endspiegels 7 um eine Achse, welche parallel zur y-Achse liegt.

Durch die erfindungsgemäße Ausbildung kann somit die Robustheit eines gütegeschalteten Festkörper-Lasers erhöht werden. Beispielsweise kann ein Laser bereitgestellt werden, der in einem weiten Temperaturbereich, z.B. von -20° C bis + 60° C funktioniert, und zwar trotz der damit verbundenen Winkelveränderungen von Komponenten aufgrund der unterschiedlichen thermischen Ausdehnung und aufgrund eines allfälligen Temperaturgefälles innerhalb des Lasers, ohne dass der Laserkopf temperiert werden müsste.

Auch kann ein gütegeschalteter Festkörper-Laser bereitgestellt werden, der besonders starken Vibrationen und Schockeinwirkungen widersteht.

So kann durch die Erfindung beispielsweise ein kompakter, robuster Laser bereitgestellt werden, der für den Transport und Außeneinsatz gut geeignet ist.

Beim zweiten Endspiegel 7, an welchem der Laserstrahl ausgekoppelt wird, handelt es sich um einen sogenannten Gradientenspiegel (="variable reflectivity mirror"), dessen Reflektivität sich über die Spiegelfläche ändert und hierbei in einem mittleren Bereich größer ist als in einem Randbereich. Mittels eines solchen Gradientenspiegels wird ein "unstable resonator" ausgebildet, wodurch große Laserstrahlquerschnitte erreicht werden können.

Beispielsweise kann der zweite Endspiegel eine Reflektivität im Zentrum von 0,5 bis 0,7 und eine Gauss'sche Ordnung (die angibt, wie rasch die Reflektivität als Funktion vom Radius vom Zentrum nach außen hin abfällt) von 6 aufweist. Der zweite Endspiegel kann im Weiteren einen Radius-Parameter von 1,6mm aufweisen.

Die Länge des Resonators in Richtung seiner größten Ausdehnung beträgt vorteilhafterweise weniger als 50cm, vorzugsweise weniger als 20cm.

Im Ausführungsbeispiel beträgt die Länge des Resonators in z-Richtung 15cm, die Brennweite des ersten Endspiegels 6 beträgt +60cm, die Brennweite des zweiten Endspiegels 7 beträgt -30cm und die Brennweite der thermischen Linse des Lasermediums 1 liegt im Bereich von +100cm.

Die Pulsdauer des vom Laser emittierten Laserstrahls beträgt mehr als 100 ps, vorzugsweise mehr als 1 ns.

Die Pulslänge des vom Laser emittierten Laserstrahls beträgt vorzugsweise weniger als 20 ns.

Die Spitzenleistung des Lasers (=die Leistung des Laserstrahls während des Pulses) beträgt jedenfalls mehr als 1 MW, wobei Werte von mehr als 5 MW besonders bevorzugt sind.

Die Pulsenergie der vom Laser abgegebenen Pulse beträgt vorzugsweise mehr als 1 mJ, wobei ein Wert von mehr als 10 mJ bevorzugt und ein Wert von mehr als 50 mJ besonders bevorzugt ist.

Ein erfindungsgemäßer Laser kann vorteilhafterweise mit kleinen Abmessungen und einem geringen Gewicht ausgebildet werden. So können die Abmessungen des Laserkopfs alleine weniger als 20cm x 10cm, vorzugsweise weniger als 12cm x 6cm betragen. Die Masse des Laserkopfs alleine kann weniger als 1 kg betragen.

In den Fig. 1 bis 3 ist der zick-zack-förmige Verlauf durch das Lasermedium 1 als in der x-z-Ebene liegend dargestellt. Dieser zick-zack-förmige Verlauf könnte auch in einer anderen Ebene liegen, z.B. in der y-z-Ebene.

Das Pumpen des Lasermediums 1 könnte auch durch eine Seitenfläche des Lasermediums 1 erfolgen, an der keine der Zick-Zack-Reflektionen des Laserstrahls erfolgt.

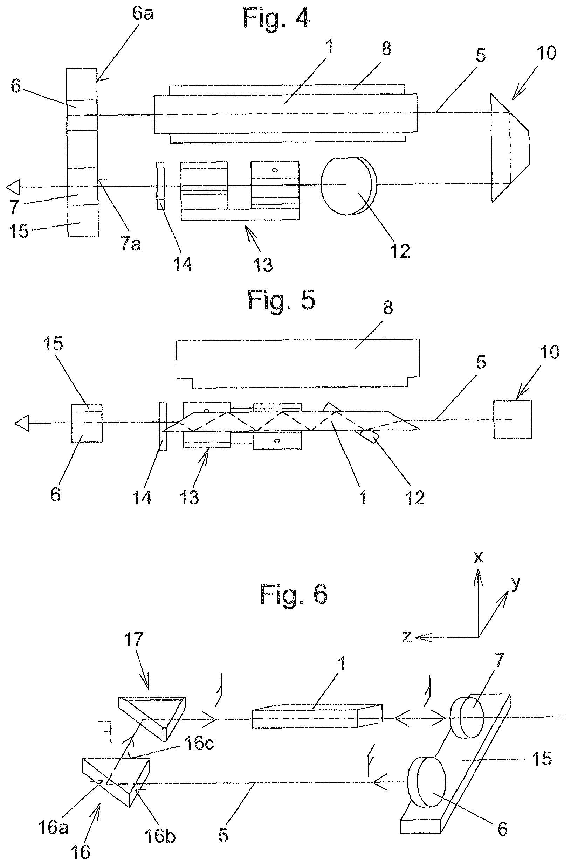

Ein zweites Ausführungsbeispiel der Erfindung ist in den Fig. 4 und 5 dargestellt, wobei auch die Strahlachse 5 des Lasers eingezeichnet ist. Der Laser gemäß diesem zweiten Ausführungsbeispiel entspricht grundsätzlich dem des ersten Ausführungsbeispiels abgesehen von den im Folgenden beschriebenen Unterschieden.

Ein separates Dove-Prisma entfällt bei diesem Ausführungsbeispiel, da das Lasermedium hier nach Art eines Dove-Prismas ausgebildet ist. Hierbei erfolgt eine ungerade Anzahl von Reflektionen des zick-zack-förmig durch das Lasermedium 1 verlaufenden Laserstrahls an den gegenüberliegenden, insbesondere parallelen Seitenflächen 4, 9 des Lasermediums 1. Die Ein- und Austrittsfläche 2, 3 sind hierbei gegenüber einer Ebene, die rechtwinkelig zu den parallelen Abschnitten der Strahlachse 5 steht, welche beidseitig an das Lasermedium 1 anschließen, in entgegengesetzte Richtungen geneigt. Vorteilhafterweise sind die Ein- und Austrittsfläche 2, 3 hierbei jeweils im Brewster-Winkel angeordnet. Der zick-zack-förmige Verlauf der Strahlachse 5 im Inneren des Lasermediums 1 steht rechtwinkelig zur Ebene, in der die Reflektion im einfachen Porro-Prisma 10 erfolgt und liegt im Ausführungsbeispiel parallel zur x-z-Ebene.

Grundsätzlich würde zum Erreichen der gewünschten Abbildungseigenschaften eine einzige Reflektion des Laserstrahls an einer der Seitenflächen 4, 9 ausreichen. Umgekehrt könnte das beim ersten Ausführungsbeispiel gezeigte Dove-Prisma auch durch ein längeres Prisma, ersetzt werden, welches entsprechend der im zweiten Ausführungsbeispiel gezeigten Form des Lasermediums 1 ausgebildet ist.

Ein drittes Ausführungsbeispiel der Erfindung ist in Fig. 6 dargestellt. Abgesehen von den im Folgenden beschriebenen Unterschieden entspricht die Ausbildung grundsätzlich derjenigen des ersten Ausführungsbeispiels.

Als optische Elemente, welche die Ausrichtung und Händigkeit eines Bildes beeinflussen, welches wiederum ausgehend vom ersten Endspiegel 6 über die zwischen dem ersten und dem zweiten Endspiegel 6, 7 angeordneten optischen Elemente propagiert wird und am zweiten Endspiegel 7 reflektiert wird, sind hier ein gleichseitiges, rechtwinkeliges Reflektionsprisma 16 und ein Amici-Prisma 17 vorhanden. Im Reflektionsprisma 16 erfolgt eine einfache Reflektion an der Bodenfläche 16a, welche die rechtwinkelig zueinander stehenden Mantelflächen 16b, 16c miteinander verbindet. Durch die Reflektion wird die Händigkeit des durch den Buchstaben F symbolisierten Bildes geändert, d.h. das Bild ist nach der Reflektion am Reflektionsprisma 16 spiegelverkehrt. Durch das Amici-Prisma 17 wird das spiegelverkehrte Bild auf den Kopf gestellt, also um 180° um die Strahlachse 5 gedreht (bezogen auf die jeweilige Propagationsrichtung vor und nach dem Amici-Prisma).

Durch das Reflektionsprisma 16 und das Amici-Prisma 17 zusammen wird die Strahlachse 5 um 180° in einer Ebene umgelenkt, im Ausführungsbeispiel in der y-z-Ebene.

Durch die Reflektion am zweiten Endspiegel 7 wird die Händigkeit des Bildes wieder umgekehrt. Insgesamt wird das Bild somit durch den Durchlauf durch die zwischen dem ersten und dem zweiten Endspiegel 6, 7 liegenden optischen Elemente und die Reflektion am zweiten Endspiegel 7 um 180° um die Strahlachse 5 gedreht, wobei die Händigkeit unverändert bleibt, jeweils in Propagationsrichtung gesehen.

Da der Polarisator, die Pockels-Zelle und das Lambda-Viertel-Plättchen, die im Ausführungsbeispiel den Güteschalter bilden, die Orientierung des Bildes bezüglich der Strahlachse 5 und die Händigkeit des Bildes nicht beeinflussen, sind diese in Fig. 6 der Einfachheit halber wieder weggelassen.

Anstelle des Reflektionsprismas 16 könnte in diesem dritten Ausführungsbeispiel auch ein Spiegel eingesetzt werden.

Unterschiedliche weitere Ausführungsformen der Erfindung sind denkbar und möglich. So könnte beispielsweise der Resonator auch eine beliebige ungerade Zahl von Faltungen >1 aufweisen. Diese zusätzlichen Faltungen könnten beispielsweise durch zusätzliche einfache Porro-Prismen erreicht werden. Für jeweils zwei zusätzliche Faltungen könnten aber auch beispielsweise zwei einfache Faltungsspiegel vorgesehen sein. Durch die zweifache Reflektion würde sich dadurch wieder die ursprüngliche Händigkeit ergeben. Auch beliebige gerade Anzahlen von Faltungen sind denkbar und möglich, beispielsweise unter Einsatz mindestens eines Amici-Prismas.

**Legende zu den Hinweisziffern:**

| | | | |
|---|---|---|---|
| 1 | Lasermedium | 11 | Dove-Prisma |
| 2 | Eintrittsfläche | 11a | Mantelfläche |
| 3 | Austrittsfläche | 11b | Mantelfläche |
| 4 | Seitenfläche | 11c | Grundfläche |
| 5 | Strahlachse | 11d | Deckfläche |
| 5a | Abschnitt | 11e | Bodenfläche |
| 5b | Abschnitt | 11f | Dachfläche |
| 6 | erster Endspiegel | 12 | Polarisator |
| 6a | reflektierende Fläche | 13 | Pockels-Zelle |
| 7 | zweiter Endspiegel | 14 | Lambda-Viertel-Plättchen |
| 7a | reflektierende Fläche | 15 | Verbindungsteil |
| 8 | Pumpeinrichtung | 16 | Reflektionsprisma |
| 9 | Seitenfläche | 16a | Bodenfläche |
| 10 | einfaches Porro-Prisma | 16b | Mantelfläche |
| 10a | Mantelfläche | 16c | Mantelfläche |
| 10b 10c | Mantelfläche Bodenfläche | 17 | Amici-Prisma |

## Patentansprüche

1. Gütegeschalteter Festkörperlaser mit einer Spitzenleistung von mehr als 1 MW, umfassend einen Resonator, welcher einen eine Strahlachse (5) aufweisenden Laserstrahl führt und welcher einen ersten und einen zweiten Endspiegel (6, 7), von denen einer als Auskoppelspiegel ausgebildet ist, und mit dem Laserstrahl zwischen dem ersten und dem zweiten Endspiegel (6, 7) zusammenwirkende optische Elemente aufweist, die ein gepumptes Lasermedium (1) umfassen, wobei der Laserstrahl vom ersten Endspiegel (6) in eine Richtung reflektiert wird, die parallel sowie gleichgerichtet mit der Richtung ist, in welche der Laserstrahl vom zweiten Endspiegel (7) reflektiert wird, oder hiervon um weniger als 30° abweicht, wobei der Resonator als instabiler Resonator und der Auskoppelspiegel als Gradientenspiegel ausgebildet ist, **dadurch gekennzeichnet, dass** die mit dem Laserstrahl zwischen dem ersten und dem zweiten Endspiegel (6, 7) zusammenwirkenden optischen Elemente derart ausgebildet sind, dass sie bei einer Propagation eines Bildes (F) ausgehend vom ersten Endspiegel (6) bewirken, dass das Bild (F) nach der Propagation über die zwischen dem ersten und dem zweiten Endspiegel (6, 7) liegenden optischen Elemente und der Reflektion am zweiten Endspiegel (7) in Propagationsrichtung gesehen um 180° +/- α gegenüber seiner ursprünglichen in Propagationsrichtung gesehenen Ausrichtung relativ zur Strahlachse (5) um die Strahlachse (5) gedreht und seitenrichtig ist, wobei α kleiner als 30° ist und diese gedrehte und seitenrichtige Übertragung des Bildes (F) nur aufgrund von Reflektionen des Laserstrahls an den zwischen dem ersten und dem zweiten Endspiegel (6, 7) liegenden optischen Elementen und am zweiten Endspiegel (7) erfolgt, und dass der erste und der zweite Endspiegel (6, 7) starr miteinander verbunden sind.

2. Gütegeschalteter Festkörperlaser nach Anspruch 1, **dadurch gekennzeichnet, dass** zusätzlich eine Größenänderung des Bildes (F) in Bezug auf mindestens eine rechtwinkelig zur Propagationsrichtung stehende Achse erfolgt.

3. Gütegeschalteter Festkörperlaser nach Anspruch 1 oder 2, **dadurch gekennzeichnet, dass** die zwischen dem ersten und zweiten Endspiegel (6, 7) angeordneten optischen Elemente ein einfaches Porro-Prisma (10) umfassen, von welchem die Strahlachse (5) des Laserstrahls in einer Ebene insgesamt um 180° umgelenkt wird.

4. Gütegeschalteter Festkörperlaser nach Anspruch 3, **dadurch gekennzeichnet, dass** die zwischen dem ersten und dem zweiten Endspiegel (6, 7) angeordneten optischen Elemente ein Prisma (11) umfassen, welches eine Spiegelung des Bildes (F) an einer Ebene bewirkt, welche parallel zur Ebene liegt, in welcher das Bild (F) vom einfachen Porro-Prisma (10) um 180° umgelenkt wird.

5. Gütegeschalteter Festkörperlaser nach Anspruch 4, **dadurch gekennzeichnet, dass** das Prisma, welches eine Spiegelung des Bildes (F) an der Ebene bewirkt, vom Lasermedium (1) selbst gebildet wird.

6. Gütegeschalteter Festkörperlaser nach Anspruch 1 oder 2, **dadurch gekennzeichnet, dass** die zwischen dem ersten und zweiten Endspiegel (6, 7) angeordneten optischen Elemente ein Amici-Dachkantprisma (17) umfassen.

7. Gütegeschalteter Festkörperlaser nach Anspruch 6, **dadurch gekennzeichnet, dass** die zwischen dem ersten und zweiten Endspiegel (6, 7) angeordneten optischen Elemente ein Reflektionsprisma (16) oder einen Spiegel umfassen, wobei das Amici-Prisma (17) in Verbindung mit dem Reflektionsprisma (16) oder Spiegel eine Umlenkung der Strahlachse (5) des Laserstrahls in einer Ebene um insgesamt 180° bewirken.

8. Gütegeschalteter Festkörperlaser nach einem der Ansprüche 1 bis 7, **dadurch gekennzeichnet, dass** der Laser als Plattenlaser ausgebildet ist.

9. Gütegeschalteter Festkörperlaser nach einem der Ansprüche 1 bis 8, **dadurch gekennzeichnet, dass** das Lasermedium (1) seitengepumpt ist.

10. Gütegeschalteter Festkörperlaser nach einem der Ansprüche 1 bis 9, **dadurch gekennzeichnet, dass** der Laser einen elektrooptischen Güteschalter aufweist.

11. Gütegeschalteter Festkörperlaser nach einem der Ansprüche 1 bis 10, **dadurch gekennzeichnet, dass** die Länge des Resonators in Richtung seiner größten Ausdehnung weniger als 50cm, vorzugsweise weniger als 20cm beträgt.

## Claims

1. Q-switched solid-state laser having a peak power of more than 1 MW, comprising a resonator which guides a laser beam having a beam axis (5) and which has a first and a second end mirror (6, 7), one of which forms an output coupler mirror, and comprising optical elements which co-operate with the laser beam between the first and the second end mirrors (6, 7) and which comprise a pumped laser medium (1), the laser beam being reflected by the first end mirror (6) in a direction which is parallel to and in the same direction as the direction in which the laser beam is reflected by the second end mirror (7) or differs therefrom by less than 30°, the resonator taking the form of an unstable resonator and the output coupler mirror that of a gradient index mirror, **characterised in that** the optical elements which co-operate with the laser beam between the first and the second end mirrors (6, 7) are such that, when an image (F) is propagated starting from the first end mirror (6), they cause the image (F) to be, when looking in the direction of propagation, non-reversed and rotated through 180° +/- α about the beam axis (5) from its original orientation relative to the beam axis (5) as seen in the direction of propagation, being so after its propagation through the optical elements situated between the first and the second end mirrors (6, 7) and its reflection at the second end mirror (7), with α being less than 30° and this rotated and non-reversed transmission of the image (F) taking place as a result only of reflections of the laser beam at the optical elements situated between the first and the second end mirrors (6, 7) and at the second end mirror (7), and **in that** the first and the second end mirrors (6, 7) are connected together rigidly.

2. Q-switched solid-state laser according to claim 1, **characterised in that**, in addition, a change in the size of the image (F) takes place on at least one axis lying at right angles to the direction of propagation.

3. Q-switched solid-state laser according to claim 1 or 2, **characterised in that** the optical elements arranged between the first and second end mirrors (6, 7) comprise a single Porro prism (10) by which the axis (5) of the laser beam is folded through a total of 180° in one plane.

4. Q-switched solid-state laser according to claim 3, **characterised in that** the optical elements arranged between the first and the second end mirrors (6, 7) comprise a prism (11) which causes reflection of the image (F) at a plane which is parallel to the plane in which the image (F) is folded through 180° by the single Porro prism (10) .

5. Q-switched solid-state laser according to claim 4, **characterised in that** the prism which causes reflection of the image (F) at the plane is formed by the laser medium (1) itself.

6. Q-switched solid-state laser according to claim 1 or 2, **characterised in that** the optical elements arranged between the first and second end mirrors (6, 7) comprise an Amici roof prism (17).

7. Q-switched solid-state laser according to claim 6, **characterised in that** the optical elements arranged between the first and second end mirrors (6, 7) comprise a reflecting prism (16) or a mirror, the Amici prism (17), in conjunction with the reflecting prism (16) or the mirror, causing folding of the axis (5) of the laser beam through a total of 180° in one plane.

8. Q-switched solid-state laser according to one of claims 1 to 7, **characterised in that** the laser takes the form of a slab laser.

9. Q-switched solid-state laser according to one of claims 1 to 8, **characterised in that** the laser medium (1) is side-pumped.

10. Q-switched solid-state laser according to one of claims 1 to 9, **characterised in that** the laser has an electro-optical Q-switch.

11. Q-switched solid-state laser according to one of claims 1 to 10, **characterised in that** the length of the resonator in the direction of its greatest extent is less than 50 cm, and preferably less than 20 cm.

## Revendications

1. Laser solide déclenché présentant une puissance de crête supérieure à 1 MW, comprenant un résonateur qui guide un faisceau laser ayant un axe de faisceau (5) et qui est muni d'un premier et d'un deuxième miroir d'extrémité (6, 7), dont l'un est conçu comme un miroir de sortie, et d'éléments optiques coopérant avec le faisceau laser entre le premier et le deuxième miroir d'extrémité (6, 7), lesquels éléments présentent un milieu laser (1) pompé, le faisceau laser étant réfléchi par le premier miroir d'extrémité (6) dans une direction qui est parallèle et de même sens que la direction dans laquelle le faisceau laser est réfléchi par le deuxième miroir d'extrémité (7), ou en en déviant de moins de 30°, le résonateur étant conçu comme un résonateur instable et le miroir de sortie comme un miroir à gradient **caractérisé en ce que** les éléments optiques coopérant avec le faisceau laser entre le premier et le deuxième miroir d'extrémité (6, 7) sont conçus de telle sorte qu'ils ont pour effet, lors d'une propagation d'une image (F) à partir du premier miroir d'extrémité (6), que l'image (F), après s'être propagée à travers les éléments optiques situés entre le premier et le deuxième miroir d'extrémité (6, 7) et s'être réfléchie sur le deuxième miroir d'extrémité (7), est tournée, considérée dans la direction de propagation, de 180° +/- α autour de l'axe de faisceau (5) par rapport à son orientation initiale, considérée dans la direction de propagation, par rapport à l'axe de faisceau (5), sans inversion gauche-droite, α étant inférieur à 30°, et ce transfert de l'image (F) tournant et sans inversion gauche-droite n'étant réalisé qu'en raison de réflexions du faisceau laser sur les éléments optiques situés entre le premier et le deuxième miroir d'extrémité (6, 7) et sur le deuxième miroir d'extrémité (7), et **en ce que** le premier et le deuxième miroir d'extrémité (6, 7) sont reliés rigidement l'un à l'autre.

2. Laser solide déclenché selon la revendication 1, **caractérisé en ce qu'**un changement de taille de l'image (F) est en outre réalisé par rapport à au moins un axe perpendiculaire à la direction de propagation.

3. Laser solide déclenché selon la revendication 1 ou 2, **caractérisé en ce que** les éléments optiques disposés entre le premier et le deuxième miroir d'extrémité (6, 7) comprennent un prisme de Porro simple (10) par lequel l'axe de faisceau (5) du faisceau laser est tourné dans un plan de 180° au total.

4. Laser solide déclenché selon la revendication 3, **caractérisé en ce que** les éléments optiques disposés entre le premier et deuxième miroir d'extrémité (6, 7) comprennent un prisme (11) qui a pour effet une réflexion de l'image (F) dans un plan qui est parallèle au plan dans lequel l'image (F) est retournée de 180° par le prisme de Porro simple (10).

5. Laser solide déclenché selon la revendication 4, **caractérisé en ce que** le prisme qui a pour effet une réflexion de l'image (F) dans le plan, est constitué par le milieu laser (1) lui-même.

6. Laser solide déclenché selon la revendication 1 ou 2, **caractérisé en ce que** les éléments optiques disposés entre le premier et deuxième miroir d'extrémité (6, 7) comprennent un prisme en toit d'Amici (17).

7. Laser solide déclenché selon la revendication 6, **caractérisé en ce que** les éléments optiques disposés entre le premier et deuxième miroir d'extrémité (6, 7) comprennent un prisme de réflexion (16) ou un miroir, le prisme en toit Amici (17) associé au prisme de réflexion (16) ou au miroir effectuant un retournement de l'axe de faisceau (5) du faisceau laser de 180° en tout dans un plan.

8. Laser solide déclenché selon l'une des revendications 1 à 7, **caractérisé en ce que** le laser est conçu comme un laser à plaque.

9. Laser solide déclenché selon l'une des revendications 1 à 8, **caractérisé en ce que** le milieu laser (1) est pompé latéralement.

10. Laser solide déclenché selon l'une des revendications 1 à 9, **caractérisé en ce que** le laser est muni d'un déclencheur électro-optique.

11. Laser solide déclenché selon l'une des revendications 1 à 10, **caractérisé en ce que** la longueur du résonateur dans la direction de sa plus grande extension est inférieure à 50 cm, de préférence inférieure à 20 cm.
